Europäisches Patentamt

European Patent Office

Office européen des brevets

(19)

(11) Veröffentlichungsnummer: **0 226 868 B1**

# (12) EUROPÄISCHE PATENTSCHRIFT

(45) Veröffentlichungstag der Patentschrift: **25.11.92**

(21) Anmeldenummer: **86116522.3**

(22) Anmeldetag: **27.11.86**

(51) Int. Cl.5: **H04J 14/00**, G02B 6/34,
G02B 6/28, G02B 6/12

(54) **Integriert-optischer Multiplex-Demultiplex-Modul für die optische Nachrichtenübertragung.**

(30) Priorität: **10.12.85 DE 3543589**

(43) Veröffentlichungstag der Anmeldung:
**01.07.87 Patentblatt 87/27**

(45) Bekanntmachung des Hinweises auf die
Patenterteilung:
**25.11.92 Patentblatt 92/48**

(84) Benannte Vertragsstaaten:
**DE FR GB**

(56) Entgegenhaltungen:
**EP-A- 0 006 052**

**OPTICS LETTERS, Band 4, Nr. 11, November
1979, Seiten 343-345, New York, US; T. FUKU-
ZAWA et al.: "Mode coupling in thin-film
chirped gratings"**

**PATENT ABSTRACTS OF JAPAN, Band 10,
Nr. 45 (P-430)[2102], 21. Februar 1986; & JP-
A-60 189 711**

(73) Patentinhaber: **SIEMENS AKTIENGESELL-
SCHAFT
Wittelsbacherplatz 2
W-8000 München 2(DE)**

(72) Erfinder: **Mahlein, Hans F., Dr.
Oueristrasse 2
W-8025 Unterhaching(DE)**

## Beschreibung

Die Erfindung betrifft einen integriert-optischen Multiplex-Demultiplex-Modul nach dem Oberbegriff des Patentanspruchs 1.

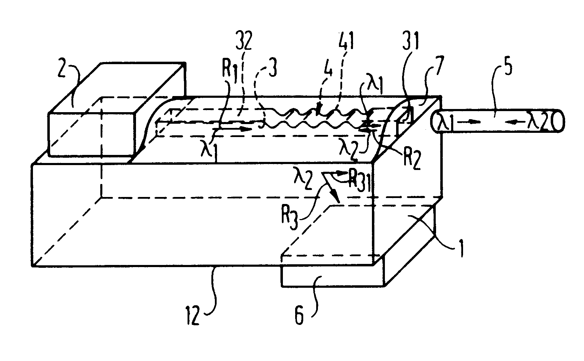

Ein derartiger Multiplex-Demultiplex-Modul oder Muldex-Modul, ist in der älteren europäischen Patentanmeldung EP-A-0 187 198 vorgeschlagen (siehe dort insbesondere Figuren 1 und 5). Bei diesem Modul verlaufen die Gitterlinien des frequenzselektiven Beugungsgitters schräg zur Ausbreitungsrichtung einer in dem von der Laserdiode zur Einkoppelstelle führenden Streifenwellenleiter geführten Strahlung. Eine in diesem Wellenleiter geführte Strahlung mit einer von der Laserdioden verschiedenen Wellenlänge wird durch das frequenzselektive Gitter seitlich aus dem Wellenleiter aus- und in einen weiteren Streifenwellenleiter eingekoppelt, der auf der gleichen Seite des Substrats angeordnet ist und der von dem einen Wellenleiter abzweigt. Das ablenkende Beugungsgitter ist ein weiteres Gitter, das auf dem weiteren Wellenleiter angeordnet ist. Die Gitterlinien dieses Gitters verlaufen senkrecht zur Ausbreitungsrichtung der in diesem Wellenleiter geführten Strahlung. Es lenkt diese Strahlung auf den Fotodetektor in Form einer Fotodiode. Bei einer Ausführungsform dieses Moduls ist die Fotodiode auf der Seite des Substrats angeordnet, die der einen Seite gegenüberliegt, auf welche die Laserdiode und die Wellenleiter mit den Gittern angeordnet sind. Das ablenkende Gitter auf dem weiteren Wellenleiter ist so bemessen, daß die vom frequenzselektiven Gitter ausgekoppelte und in dem weiteren Wellenleiter geführte Strahlung durch das Substrat auf die Diode gelenkt wird.

Aus H. G. Unger: Planar and integrated Multi- and Demultiplexers in Proc. of the 6th European Conf. on Circuit Theory and Design, 6.-8. Sept. 1983, VDE-Verlag, Berlin, Seiten 387-389, ist ein integriert-optischer Muldex-Modul bekannt, bei dem auf einer Seite eines Substrats eine Laserdiode, ein die Laserdiodenstrahlung zu einer Aus-und Einkoppelstelle führender Schichtwellenleiter und eine Fotodiode angeordnet sind. Auf dem Schichtwellenleiter ist ein frequenzselektives Beugungsgitter angeordnet, das im Gegensatz zum Modul der eingangs genannten Art die Laserdiodenstrahlung in Richtung zur Auskoppelstelle ablenkt, aber eine von der Einkoppelstelle zugeführte Strahlung mit einer von der Laserdiodenstrahlung verschiedenen Wellenlänge nicht beeinflußt. Die Gitterlinien des frequenzselektiven Gitters verlaufen schräg zu den Ausbreitungsrichtungen der genannten Strahlungen und sind außerdem gekrümmt, derart, daß die divergierende Laserdiodenstrahlung nach der Ablenkung am Gitter konvergent ist. Die Fotodiode erscheint als im Strahlengang der vom frequenzselektiven Gitter nicht beeinflußten Strahlung mit der von der Laserdiodenstrahlung verschiedenen Wellenlänge angeordnet. Ein ablenkendes Beugungsgitter, das diese Strahlung zur Diode lenkt, scheint nicht vorhanden zu sein.

Aufgabe der Erfindung ist es, einen Multiplex-Modul der eingangs genannten Art baulich einfacher zu gestalten.

Diese Aufgabe wird durch die im kennzeichnenden Teil des Patentanspruchs 1 angegebenen Merkmale gelöst.

Der erfindungsgemäße Modul benötigt nur einen Streifenwellenleiter und kommt mit einem einzigen Gitter aus, das sowohl die Funktion des frequenzselektiven Gitters als auch die Funktion des Umlenkgitters übernimmt. Die Gitterlinien sind gerade und verlaufen senkrecht zur Ausbreitungsrichtung der im Wellenleiter geführten Strahlungen. Dies vereinfacht die Herstellung des Gitters.

Bei den in Rede stehenden Muldex-Modulen sollte der strahlungsempfindliche Detektor möglichst weit von der Laserdiode entfernt angeordnet sein. Eine in diesem Sinne vorteilhafte Ausgestaltung des erfindungsgemäßen Moduls ist im Anspruch 2 angegeben.

Die Erfindung wird anhand der Figur in der folgenden Beschreibung näher erläutert.

Die Figur zeigt in perspektivischer schematischer Darstellung den hier vorgeschlagenen Muldex-Modul.

Bei diesem Modul sind auf der Oberseite 11 eines Substrats 1 aus geeignetem Halbleitermaterial, beispielsweise aus InP, eine Laserdiode 2 und ein von dieser Diode 2 geradlinig zu einer Aus- und Einkoppelstelle 31 führender Streifenwellenleiter 3 angeordnet. Die Aus- und Einkoppelstelle 31 ist durch die der Laserdiode 2 fernliegenden Stirnfläche des Wellenleiters 3 gegeben.

An dieser Stelle 31 kann die im Wellenleiter 3 geführte Laserdiodenstrahlung mit beispielsweise der Wellenlänge $\lambda_1$ ausgekoppelt und beispielsweise in eine Glasfaser 5 eingekoppelt werden. Andererseits kann an dieser Stelle 31 eine dem Wellenleiter 3 zugeführte Strahlung mit einer von der Laserdiodenstrahlung verschiedenen Wellenlänge $\lambda_2$ in den Wellenleiter 3 eingekoppelt werden.

Auf der Oberseite 32 eines Teils des Wellenleiters 3 ist das optische Beugungsgitter 4 angeordnet, dessen die Gitterlinien definierenden Furchen 41 senkrecht zur Ausbreitungsrichtung $R_1$ oder $R_2$ einer im Wellenleiter 3 geführten Strahlung orientiert sind. Das Gitter 4 kann beispielsweise durch Ätzen hergestellt werden. Es kann auch auf der Unterseite des Wellenleiters 3 angeordnet werden.

Das Gitter 4 ist so dimensioniert, daß einerseits die von der Laserdiode 2 emittierte Laserdiodenstrahlung möglichst wenig gestört wird und andererseits die beispielsweise von der Glasfaser 5 in den Streifenwellenleiter 3 eingekoppelte Strahlung

der Wellenlänge $\lambda_2$ in Richtung zur Unterseite 12 des Substrats 1 gebeugt wird.

Auf dieser Unterseite 12 ist am Auftreffort der durch das Gitter 4 abgebeugten Strahlung mit der Wellenlänge $\lambda_2$ eine Fotodiode 6 angeordnet.

Um einen möglichst großen Abstand zwischen der Laserdiode 2 und der Fotodiode 6 zu Erzeugen, ist das Gitter 4 so bemessen, daß die Hauptrichtung $R_3$ der von ihm abgebeugten Strahlung mit der Wellenlänge $\lambda_2$ derart schräg nach unten weist, daß sie eine von der Laserdiode fortweisende Komponente $R_{31}$ hat.

Zur Herstellung der Laserdiode 2 und des Streifenwellenleiters 3 mit dem Gitter 4 können beispielsweise durch geeignete Epitaxie-, Maskierungs- und Ätzschritte Schichten der Laserdiode, beispielsweise aus InGaAsP verschiedener Zusammensetzung aufgebracht werden (siehe beispielsweise die genannte ältere europäische Patentanmeldung EP-A-0 187 198). Der Streifenwellenleiter 3 kann auch als streifenbelasteter Schichtwellenleiter oder Rippenwellenleiter ausgeführt werden. Die Laserdiode 2 wird vorzugsweise mit verteilter Rückkopplung versehen.

Der Streifenwellenleiter 3 und das Gitter 4 sind durch eine Passivierungsschicht 7, beispielsweise aus $Si_3N_4$ oder InP, abgedeckt und dadurch geschützt.

Die Fotodiode 6 kann durch Epitaxie-, Maskierungs- und Ätzschritte aufgebracht werden, wobei ihr pn-Übergang parallel zur Unterseite 12 verläuft.

Bezugszeichenlist

| | |
|---|---|
| 1 | Substrat |
| 11 | Oberseite des Substrats |
| 12 | Unterseite des Substrats |
| 2 | Laserdiode |
| 3 | Streifen- oder Schichtwellenleiter |
| 31 | Aus- und Einkoppelstelle |
| 32 | Oberseite des Wellenleiters |
| 4 | Beugungsgitter |
| 41 | Furche des Gitters |
| 5 | Glasfaser |
| 6 | Fotodiode |
| 7 | Passivierungsschicht |
| $R_1, R_2$ | Ausbreitungsrichtung einer im Wellenleiter geführten Strahlung |
| $R_3$ | Hauptrichtung der vom Gitter abgebeugten Strahlung |
| $R_{31}$ | Komponente der Hauptrichtung $R_3$ |

**Patentansprüche**

1. Integriert-optischer Multiplex-Demultiplex-Modul für die insbesondere bidirektionale optische Nachrichtenübertragung,

- wobei auf einer Seite (11) eines Substrats (1) eine Laserdiode (2) und ein die Laserdiodenstrahlung zu einer Aus- und Einkoppelstelle (31) führender Streifen- oder Schichtwellenleiter (3) angeordnet sind,
- wobei der Wellenleiter (3) ein frequenzselektives Gitter aufweist, das die geführte Laserdiodenstrahlung im wesentlichen nicht beeinflußt, aber eine von der Einkoppelstelle (31) zugeführte Strahlung mit einer von der Laserdiodenstrahlung verschiedenen Wellenlänge ($\lambda_2$) aus dem Wellenleiter (3) auskoppelt,
- wobei der Wellenleiter (3) ein ablenkendes Beugungsgitter mit zur Ausbreitung der zugeführten Strahlung mit der von der Laserdiodenstrahlung verschiedenen Wellenlänge ($\lambda_2$) im Wellenleiter (3) senkrecht verlaufenden Gitterlinien aufweist, das diese Strahlung in das Substrat (1) lenkt,

**dadurch gekennzeichnet,** daß das frequenzselektive Gitter und das ablenkende Beugungsgitter durch ein einziges Gitter (4) gebildet sind, dessen Gitterlinien (41) senkrecht zur Ausbreitungsrichtung ($R_1$, $R_2$) einer im Wellenleiter (3) geführten Strahlung verlaufen, und daß auf einer anderen Seite (12) des Substrats ein Photodetektor (6) im Strahlengang der vom Gitter (4) in das Substrat (1) gelenkte und das Substrat (1) durchstrahlende Strahlung mit der von der Laserdiodenstrahlung verschiedenen Wellenlänge ($\lambda_2$) angeordnet ist.

2. Modul nach Anspruch 1, **dadurch gekennzeichnet,** daß das Gitter (4) so bemessen ist, daß die Hauptrichtung ($R_3$) einer von der Einkoppelstelle (31) zugeführten und vom Gitter (4) in das Substrat (1) abgebeugten Strahlung mit der von der Laserdiodenstrahlung verschiedenen Wellenlänge ($\lambda_2$) eine von der Laserdiode (2) fortweisende Komponente ($R_{31}$) aufweist.

**Claims**

1. Integrated optical multiplex-demultiplex module for, in particular bidirectional, optical communications,

- in which a laser diode (2) and a strip or film waveguide (3) carrying the laser diode radiation to a coupling-out and coupling-in location (31) are arranged on one side (11) of a substrate (1),
- in which the waveguide (3) has a frequency-selective grating which essentially does not influence the laser diode radiation carried, but which couples radiation which has a wavelength ($\lambda_2$) different from the laser diode radiation and is supplied from the coupling-in location (31) out of the waveguide (3),

- in which the waveguide (3) has a deflecting diffraction grating having grid lines proceeding in the waveguide (3) perpendicularly to the propagation of the supplied radiation having the wavelength ($\lambda_2$) different from the laser diode radiation, which grating guides said radiation into the substrate (1),

characterised in that the frequency-selective grating and the deflecting diffraction grating are formed by a single grating (4), the grid lines (41) of which proceed perpendicularly to the propagation direction ($R_1$, $R_2$) of radiation carried in the waveguide (3), and in that on another side (12) of the substrate a photodetector (6) is arranged in the beam path of the radiation which has the wavelength ($\lambda_2$) different from the laser diode radiation and is guided by the grating (4) into the substrate (1) and radiates through the substrate (1).

2. Module according to Claim 1, characterised in that the grating (4) is dimensioned in such a way that the principal direction ($R_3$) of radiation which has the wavelength ($\lambda_2$) different from the laser diode radiation and is supplied from the coupling-in location (31) and diffracted by the grating (4) into the substrate (1) has a component ($R_{31}$) directed away from the laser diode (2).

**Revendications**

1. Module de multiplexage-démultiplexage optique intégré pour la transmission optique, notamment bidirectionnelle, d'informations, dans lequel

- sur une face (11) d'un substrat (1) sont disposés une diode laser (2) et un guide d'ondes en forme de bande ou de couche (3), qui guide le rayonnement de la diode laser jusqu'à un point de découplage et d'injection (31),

- le guide d'ondes (3) possède un réseau sélectif du point de vue des fréquences, qui n'influe sensiblement pas sur le rayonnement guidé de la diode laser, mais découple, du guide d'ondes (3), un rayonnement qui est envoyé à partir du point d'injection (31) et possède une longueur d'onde ($\lambda_2$) différente de celle du rayonnement de la diode laser,

- le guide d'ondes (3) possède un réseau de diffraction déviateur comportant des traits qui sont perpendiculaires à la direction de propagation du rayonnement envoyé, qui possède une longueur d'onde ($\lambda_2$) différente du rayonnement de la diode laser, dans le guide d'ondes (3), ce réseau déviant ce rayonnement en l'introduisant dans le substrat (1),

caractérisé par le fait que le réseau sélectif du point de vue des fréquences et le réseau de diffraction déviateur sont formés par un seul réseau (4), dont les traits (41) sont perpendiculaires à la direction de propagation ($R_1$,$R_2$) d'un rayonnement guidé dans le guide d'ondes (3), et

que sur l'autre face (12) du substrat, un photodétecteur (6) est disposé dans le trajet du rayonnement qui est dévié par le réseau (4) dans le substrat (1) et traverse ce substrat (1) et possède la longueur d'onde ($\lambda_2$) qui diffère de celle du rayonnement de la diode laser.

2. Module suivant la revendication 1, caractérisé par le fait que le réseau (4) est dimensionné de telle sorte que la direction principale ($R_3$) d'un rayonnement introduit par le point d'injection (31) et diffracté par le réseau (4) en étant introduit dans le substrat (1) et possédant la longueur d'onde ($\lambda_2$) qui diffère de celle du rayonnement de la diode laser, possède une composante ($R_{31}$), qui se propage à partir de la diode laser (2).